# EUROPÄISCHE PATENTSCHRIFT

(11) **EP 1 158 317 B1**
(45) Veröffentlichungstag und Bekanntmachung des Hinweises auf die Patenterteilung: **18.02.2004**
(21) Anmeldenummer: 01110570.7
(22) Anmeldetag: 30.04.2001
(51) Int. Cl.: G02B 5/18

(54) **Littrow-Gitter sowie Verwendungen eines Littrow-Gitters**
Echelle grating and use of an echelle grating
Réseau échelle et son utilisation

(30) Priorität: 22.05.2000 DE 10025214
(43) Veröffentlichungstag der Anmeldung: 28.11.2001
(73) Patentinhaber: Carl Zeiss Laser Optics GmbH, 73447 Oberkochen (DE)
(72) Erfinder: Kleemann, Bernd, 73431 Aalen (DE); Heidemann, Klaus, 73447 Oberkochen (DE)
(74) Vertreter: Ostertag, Ulrich, Dr.

(56) Entgegenhaltungen:
- EP-A- 0 349 144
- US-A- 3 045 532
- US-A- 5 461 239
- US-A- 5 629 804

## Beschreibung

Die Erfindung betrifft ein Littrow-Gitter nach dem Oberbegriff des Patentanspruchs 1.

Ein derartiges Littrow-Gitter ist aus der WO 00/16134 bekannt.

Littrow-Gitter werden dann eingesetzt, wenn eine hohe Reflexionseffizienz, d.h. eine hohe Beugungseffizienz in Littrow-Anordnung, gefordert ist. Ein Apex-Winkel < 90° führt dazu, daß die Gegenflanke, die beim Betrieb des Littrow-Gitters nicht mit Licht beaufschlagt wird, vom Weg der auf die Blaze-Flanke einfallenden Lichtstrahlen beabstandet ist. Dadurch kommt es, wie Rechnungen zeigen, nicht zu einer Wechselwirkung insbesondere der Komponenten der einfallenden Lichtstrahlen mit TM-Polarisation mit der Gegenflanke. Diese Wechselwirkung führt bei Littrow-Gittern mit größeren Apex-Winkeln, bei denen die einfallenden Lichtstrahlen direkt benachbart zur Oberfläche der Gegenflanke verlaufen, zu einer unerwünschten Reduktion der Reflexionseffizienz.

Bei der Herstellung derartiger bekannter Littrow-Gitter muß aufgrund des Apex-Winkels < 90° sehr viel Material des Gitter-Rohlings abgetragen werden, da die Gegenflanke sehr tief in den Gitterrohling "eintaucht". Diese Notwendigkeit, sehr viel Material beim Herstellungsprozeß abzutragen, erschwert und verteuert die Herstellung derartiger bekannter Gitter.

Aus der eingangs bereits genannten WO 00/16134 ist ein mikrolithographisches Verfahren zur Herstellung von Littrow-Gittern bekannt, welches dazu führt, daß sich zwischen den Blaze-Flanken und den Gegenflanken Verbindungsflächen ausbilden, die parallel zu einer Grundfläche des Gitters verlaufen. Diese Verbindungsflächen liegen, von der Grundfläche aus gemessen, auf derselben Höhe wie die tiefsten Punkte der Blaze-Flanken.

Aus der US-A-3 045 532 ist ein Echelle-Gitter bekannt, bei dem die Blaze-Flanken, nicht jedoch die Gegenflanken jeweils in zwei winkelig zueinander angeordnete Flächenbereiche unterteilt sind. Durch diese Verteilung der Blaze-Flanken soll sich das Gitter für einen weiteren Bereich von Lichtwellenlängen eignen.

Ein strukturell ähnlich aufgebautes Echelle-Gitter, das allerdings als optisches Speichermedium vorgesehen ist, ist aus der US-A-5 461 239 bekannt. Zweck der Unterteilung der Blaze-Flanken in zwei winkelig zueinander angeordnete Flächenbereiche ist dabei, für eine bestimmte Wellenlänge unterschiedliche Beugungsmuster zu erzeugen.

Aufgabe der vorliegenden Erfindung ist es, ein Littrow-Gitter der eingangs genannten Art derart weiterzubilden, daß es sich einfacher und preiswerter herstellen läßt, ohne dabei eine Minderung der Reflexionseffizienz in Kauf nehmen zu müssen.

Diese Aufgabe wird erfindungsgemäß dadurch gelöst, daß die Gegenflanke mindestens zwei im wesentlichen ebene Flächenabschnitte umfaßt, die aneinander angrenzend gegeneinander um einen Neigungswinkel geneigt sich parallel zur Erstreckungsrichtung der Beugungsstruktur erstrecken, wobei durch die Neigung der mindestens zwei Flächenabschnitte zueinander die Gegenflanke insgesamt eine von der Lichteinfallsseite her gesehen konkave Oberfläche aufweist.

Durch eine derartige Facettierung der Gegenflanke in mindestens zwei Flächenabschnitte wird erreicht, daß sich die Gegenflanke zwar im Bereich des Scheitels der Beugungstruktur schnell vom Weg der Lichtstrahlen entfernt (Apex-Winkel < 90°) ; aufgrund der konkaven Facettierung und dem daraus resultierenden nicht so stark geneigten zweiten Flächenabschnitt taucht die Gegenflanke jedoch nicht so tief in den Gitterrohling ein, wie dies bei einer ebenen Gegenflanke der Fall wäre. Der Materialabtrag bei der Herstellung des Littrow-Gitters ist daher reduziert, was die Herstellung vereinfacht und preiswerter macht.

Bevorzugt weisen die Flächenabschnitte senkrecht zur Erstreckungsrichtung der Beugungsstrukturen gemessen ein Breitenverhältnis von 0,5 bis 2 auf. Bei einem derartigen Breitenverhältnis, bei dem ein Flächenabschnitt höchstens doppelt so breit ist wie der andere, ist bei gegebenem Neigungswinkel und gegebenem Apex-Winkel der Bereich der Gegenflanke, in dem die beiden Flächenabschnitte aneinander angrenzen, relativ weit vom Lichtweg der einfallenden Lichtstrahlen entfernt. Dadurch ist die Wechselwirkung der einfallenden Lichtstrahlen mit der Gegenflanke optimal gering.

Der Neigungswinkel kann im Bereich vom 90° bis 150° liegen. Bei einer derartigen Wahl des Neigungswinkels erfolgt eine gute Reduktion des erforderlichen Materialabtrags zum Herstellen des Littrow-Gitters.

Bevorzugt besteht das Littrow-Gitter aus Quarzglas. Derartige Materialien lassen sich durch reaktives Ionenstrahlätzen (RIBE) bzw. durch reaktives Ionenätzen (RIE) bearbeiten und bieten sich daher zur holographischen Herstellung der erfindungsgemäßen Beugungstrukturen an. Alternativ läßt sich auch ein kristallines Material als Material für das Littrow-Gitter einsetzen, wie z.B. Silicium, wobei man dann zusätzlich die Kristalloberfläche zur kristallographischen Orientierung des Kristalls derart ausrichten kann, daß sich eine Vorzugsrichtung bei der Bearbeitung, z.B. durch anisotropes chemisches Ätzen mit KOH, ergibt. Diese Vorzugsrichtung läßt sich z.B. zur Vorgabe des Neigungswinkels oder des Apex-Winkels ausnutzen. Besteht das Beugungsgitter aus dotiertem Quarz, wird das holographische Herstellungsverfahren nochmals vereinfacht, da sich dieses Material aufgrund seines vorteilhaften Expansionsverhaltens bei einem derartigen Herstellungsverfahren sowie bei der Benutzung gut eignet.

Das Littrow-Gitter kann eine die Reflektivität steigernde Beschichtung aufweisen. Dadurch wird die Reflexionseffizienz des Littrow-Gitters gesteigert.

Im Falle des Einsatzes einer die Reflektivität steigernden Beschichtung ist diese bevorzugt eine Aluminium-Beschichtung. Eine derartige Beschichtung ist relativ preiswert und weist ein hohes erreichbares Reflexionsvermögen auf.

Alternative Möglichkeiten zur Steigerung der Reflexionseffizienz durch die Materialauswahl ergeben sich, wenn statt einer die Reflektivität steigernden Beschichtung das Littrow-Gitter ein dielektrisches Schichtsystem, z.B. eine Mehrzahl von aufeinanderfolgenden Schichten, z.B. aus Al₂O₃ (hochbrechend) und MgF₂ (niedrigbrechend) oder aus LaF₃ (hochbrechend) und MgF₂ (niedrigbrechend), aufweist, wobei die Schichtfolge so gewählt wird, daß eine Reflexionsschicht hoher Effizienz resultiert.

Die Blaze-Flanke kann senkrecht zur Erstreckungsrichtung der Beugungsstrukturen gemessen eine Mindestbreite von g cos(Theta) aufweisen, wobei g die Gitterperiode des Littrow-Gitters und Theta den Littrow-Winkel bezeichnen. Eine derartige Breite gewährleistet, daß das gesamte Bündel einfallender Lichtstrahlen von den Blaze-Flanken reflektiert werden kann. Hat die Blaze-Flanke genau die Breite nach der angegebenen Berechnungsformel, kann ein Littrow-Gitter mit minimalem Materialabtrag realisiert werden.

Eine weitere Aufgabe der vorliegenden Erfindung ist es, Verwendungen für das erfindungsgemäße Littrow-Gitter anzugeben, bei denen die dargestellten Vorteile des Littrowgitters gut genutzt werden. Diese Aufgabe wird gelöst durch die nachfolgend aufgeführten bevorzugten Verwendungen:

Eine bevorzugte Verwendung des Littrow-Gitters ist diejenige in einer Beugungsordnung der einfallenden Lichtwellenlänge oberhalb oder gleich der 15. Beugungsordnung. Bei einer derart hohen Beugungsordnung ist die Dispersion des Littrow-Gitters zur Auswahl der reflektierten Wellenlänge vorteilhaft hoch. Gleichzeitig sind, da die Gitterperiode proportional zur Beugungsordnung ist, die Anforderungen an die Herstellung des Littrow-Gitters nicht so hoch.

Ein vorteilhaftes Verwendungsgebiet des Littrow-Gitters ist die Beugung von UV-Licht mit einer Wellenlänge, die geringer ist als 250 nm. Derartige UV-Lichtquellen sind insbesondere in der Projektions-Lithographie zur Herstellung von Halbleiterstrukturen bei der Chip-Fertigung im Einsatz. Mit einem erfindungsgemäßen Littrow-Gitter läßt sich die Wellenlänge einer derartigen Projektions-Lichtquelle schmalbandig und effizient selektieren.

Ein Ausführungsbeispiel der Erfindung wird nachfolgend anhand der Zeichnung näher erläutert; es zeigen:
- Figur 1:: einen Schnitt durch einen Ausschnitt eines Littrow-Gitters, wobei die Schnittebene senkrecht zur Erstreckungsrichtung der Beugungsstrukturen des Littrow-Gitters verläuft; und
- Figuren 2 und 3:: Momentaufnahmen bei der Herstellung eines Littrow-Gitters nach Figur 1.

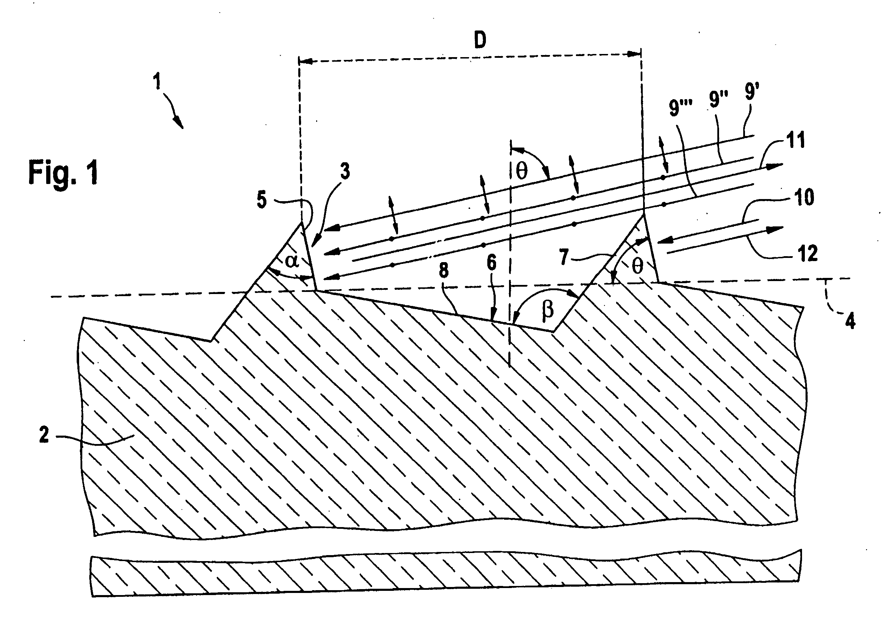

Figur 1 zeigt einen Ausschnitt eines insgesamt mit Bezugszeichen 1 versehenen Littrow-Gitters mit einem Träger 2, auf dem eine Vielzahl paralleler, periodisch angeordneter Beugungsstrukturen 3 angeformt sind, wobei der Ausschnitt von Figur 1 ungefähr zwei Gitterperioden darstellt. Der Träger 2 sowie die Beugungsstrukturen 3 bestehen aus Quarzglas. Die Gitterperiode D, also der Abstand zwischen zwei Beugungsstrukturen 3, beträgt 3002,5 nm.

Die Dicke des Trägers 2 ist verglichen mit der Höhe der Beugungsstrukturen 3 sehr groß, z.B. im Bereich mehrerer Millimeter, weswegen der Träger 2 in Figur 1 unterbrochen dargestellt ist.

Die Oberfläche einer Beugungsstruktur 3 besteht aus drei Flächenabschnitten, die jeweils unterschiedlich zu einer Grundfläche 4 geneigt sind, die vom Träger 2 vorgegeben wird:

Der am steilsten zur Grundfläche 4 geneigte Flächenabschnitt wird von einer Blaze-Flanke 5 gebildet, die in noch zu beschreibender Weise mit einfallenden Lichtstrahlen wechselwirkt. Die reflektierende Fläche der Blaze-Flanke 5 hat in der Zeichenebene von Fig. 1 eine Breite von 777,1 nm und ist gegenüber der Grundfläche 4 um einen Winkel Theta von 75° geneigt, der für einfallenden Lichtstrahlen ein Littrow-Winkel ist, wie ebenfalls noch beschrieben wird.

Die beiden anderen Flächenabschnitte der Beugungsstruktur 3, auf welche beim Betrieb des Littrow-Gitters 1 nicht wie auf die Blaze-Flanke 5 die Lichtstrahlen direkt einfallen, bilden eine sich jeweils zwischen den Blaze-Flanken 5 zweier benachbarter Beugungsstrukturen 3 erstreckende Gegenflanke 6: Ein erster Flächenabschnitt 7 der Gegenflanke 6 begrenzt mit der an ihn angrenzenden Blaze-Flanke 5 einen Apex-Winkel α der Beugungsstruktur 3, der geringer ist als 90° und in Figur 1 einen Wert von ca. 50° hat. Ein zweiter Flächenabschnitt 8 der Gegenflanke 6 liegt jeweils zwischen dem ersten Flächenabschnitt 7 und der benachbarten Blaze-Flanke 5.

Die beiden aneinander angrenzenden Flächenabschnitte 7 und 8 sind gegeneinander um einen Neigungswinkel β im Bereich von ca. 120° derart geneigt, daß die Gegenflanke 6 von der Lichteinfallsseite des Littrow-Gitters 1 her gesehen konkav ist. Die Breiten der Flächenabschnitte 7, 8 senkrecht zur Erstreckungsrichtung der Beugungsstrukturen 3 3, also im Fall des Flächenabschnitts 7 der Abstand zwischen den Begrenzungskanten, die gebildet werden durch die Blaze-Flanke 5 und den Flächenabschnitt 7 einerseits und durch den Flächenabschnitt 7 und den Flächenabschnitt 8 andererseits, und im Fall des Flächenabschnitts 8 der Abstand zwischen den Begrenzungskanten, die gebildet werden durch die Blaze-Flanke 5 und den Flächenabschnitt 8 einerseits und durch den Flächenabschnitt 8 und den Flächenabschnitt 7 andererseits, haben in der Darstellung von Figur 1 ein Breitenverhältnis von ca. 1 zu 1,5.

Auch andere Breitenverhältnisse, insbesonddere ein Breitenverhältnis von 1 zu 1, sind hier möglich, wobei optimale Effizienzparameter des Littrow-Gitters 1 sich durch wechselweises Optimieren der Breiten sowie des Apexwinkels α und des Neigungswinkels β ergeben.

Das Littrow-Gitter 1 funktioniert folgendermaßen:

Lichtstrahlen, die von einer Lichtquelle (nicht dargestellt) ausgesandt werden und von denen in Figur 1 beispielhaft die Lichtstrahlen 9', 9'', 9''', 10 dargestellt sind, fallen parallel auf das Littrow-Gitter 1 ein. Dessen Blaze-Flanken 5 schließen mit der Grundfläche 4 den Littrow-Winkel Theta von 75°, der sich für die angegebene Gitterperiode D und eine Lichtwellenlänge von 193,35 nm in dreißigster Ordnung ergibt, ein. Die angegebene Lichtwellenlänge ist die eines Argon-Fluorid-Excimerlasers. Die einfallenden Lichtstrahlen 9, 10 können dabei sowohl senkrecht zur Erstreckungsrichtung der Beugungsstrukturen 3 (TM-Polarisation, Lichtwelle 9') als auch parallel zur Erstreckungsrichtung der Beugungsstrukturen 3 polarisiert sein (TE-Polarisation, Lichtwellen 9'', 9'''), wie dies in Figur 1 schematisch dargestellt ist.

Bei der gewählten Gitterperiode D der Beugungsstrukturen 3 ist für in die Einfallsrichtung zurückreflektierte Lichtstrahlen 11, 12 der angegebenen Wellenlänge die Beugungsbedingung, d.h. die Bedingung konstruktiver Interferenz dreißigster Ordnung erfüllt. Das Littrow-Gitter 1 wirkt also für die einfallenden Lichtstrahlen 9, 10 als Spiegel, der einfallende Lichtstrahlen 9, 10 in dreißigster Beugungsordnung in sich zurückreflektiert.

Für die oben genannten Bedingungen ergeben sich folgende Effizienzparameter für das Littrow-Gitter 1:
1. Eine Reflexionseffizienz von ≥ 60%, die abhängig vom Breitenverhältnis der Flächenabschnitte 7, 8 und der Größe des Neigungswinkels β bis zu 75% gesteigert werden kann, wobei die Reflexionseffizienz für die TE-Polarisation höher ist als für die TM-Polarisation, insgesamt jedoch nur relativ geringe Reflexionseffizienzunterschiede zwischen TE- und TM-Polarisation vorliegen.
2. Eine Absorption, die ≤ 20% ist, und durch die oben angedeutete Optimierung von Breitenverhältnis und Neigungswinkel der Flächenabschnitte 7, 8 bis auf unter 10% verringert werden kann, wobei auch hier der Absorptionsparameter für TE-Polarisation günstiger ist als für die TM-Polarisation.

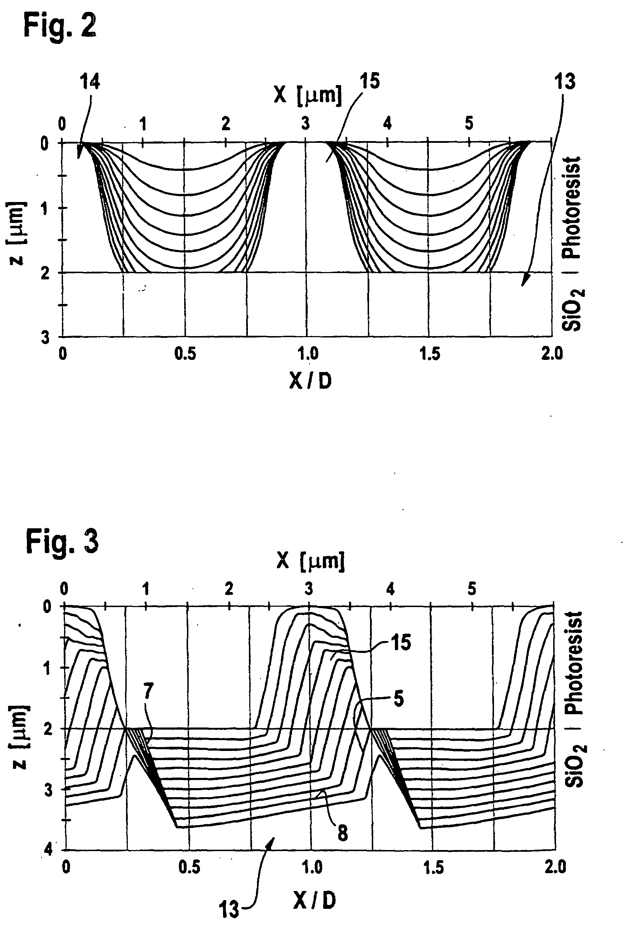

Die Herstellung eines Littrow-Gitters nach Art des Littrow-Gitters 1 von Figur 1 verdeutlichen die Herstellungsstadien, die in den Figuren 2 und 3 dargestellt sind. Die Schnittebene dieser Figuren ist analog zu derjenigen der Figur 1 gewählt, allerdings sind die Beugungsstrukturen 3 im Vergleich zu Figur 1 um eine Ebene senkrecht zur Zeichenebene der Figur 1 und senkrecht zur Grundfläche 4 gespiegelt dargestellt.

Im ersten Herstellungsschritt wird ein Gitterrohling 13 aus Quarzglas mit einer Photoresist-Maske 14 beschichtet, holographisch belichtet und sodann entwickelt. In Figur 2 ist der zeitliche Verlauf des Querschnitts dieser Struktur im Zuge der Entwicklung der Photoresist-Maske 14 gezeigt. Die oberste Kurve von Figur 2 stellt die unentwickelte Photoresist-Maske 14 dar, deren ebene Oberfläche parallel zu derjenigen des Gitterrohlings 13 ist. Im Verlauf der Entwicklung verbleiben in der Bildmitte und den seitlichen Rändern von Figur 2 Stege 15, zwischen denen der Photoresist 14 entfernt wird, derart, daß insgesamt ein halbsinusförmiges Furchenprofil des Photoresists 14 auf dem Gitterrohrling 13 resultiert. Die einzelnen Kurven, die in Figur 2 dargestellt sind, geben die momentane Höhe des Photoresists 14 im Verlauf der Photoresist-Entfernung zu aufeinanderfolgenden Zeitpunkten an. Die Photoresist-Stege 15 haben gemäß der Vorgabe durch die Belichtung zueinander schon den Abstand, der dem für die Beugungsstrukturen 3 gewünschten Abstand von 2958 nm entspricht.

In einem zweiten Herstellungsschritt wird die im ersten Schritt entstandene Struktur einem Ar-Ionenstrahlätzen unterzogen. In Figur 3 ist der zeitliche Verlauf des Querschnitts des Gitterrohlings 13 mit den Photoresist-Stegen 15 bei diesem Vorgang dargestellt. Sowohl die Photoresist-Stege 15 als auch der Gitterrohling 13 werden schichtweise mit geneigter Vorzugsrichtung abgetragen, bis im Gitterrohrling 13 eine Ätztiefe von ca. 3,5 µm, gemessen von der ursprünglichen Oberfläche der Photoresist-Maske 14, erreicht ist. Dabei werden aufgrund der geneigten Ätz-Vorzugsrichtung eine asymmetrische Profilverformung des im ersten Schritt hergestellten halbsinusförmigen Furchenprofils und eine Strukturübertragung in den Gitterrohling 13 erreicht. Die unterste Kurve von Figur 3 zeigt den Zustand bei Erreichen der Soll-Ätztiefe.

Beim Ar-Ionenstrahlätzen des zweiten Herstellungsschritts wird die Photoresist-Maske 14 vollständig entfernt. Es verbleibt somit das aus dem Gitterrohling 13 geformte Littrow-Gitter nach Art des Littrow-Gitters 1 von Figur 1.

Zur Steigerung der Reflexionseffizienz kann das Littrow-Gitter 1 noch zusätzlich mit einer Aluminium-Reflexionsschicht (nicht dargestellt) beschichtet werden, die ggf. noch mit einer MgF₂-Schicht überzogen ist.

Alternative Möglichkeiten zur Steigerung der Reflexionseffizienz sind der Einsatz eines dielektrischen Schichtsystems mit alternierenden Lagen einer hochbrechenden und einer niedrigbrechenden Schicht. Als Materialien für die hochbrechende Schicht kommen Al₂O₃ oder LaF₃, für die niedrigbrechende Schicht MgF₂ in Frage.

## Patentansprüche

1. Littrow-Gitter mit einer Vielzahl paralleler, periodisch aufeinanderfolgender Beugungsstrukturen, die auf einem eine Grundfläche vorgebenden Träger angeordnet sind und jeweils eine im wesentlichen im Littrow-Winkel zur Grundfläche geneigte ebene Blaze-Flanke und eine Gegenflanke umfassen, wobei die Blaze-Flanke und die Gegenflanke im Scheitel einer Beugungsstruktur einen Apex-Winkel bilden, der geringer ist als 90 °,
wobei
a) die Gegenflanke mindestens zwei im wesentlichen ebene Flächenabschnitte umfaßt, die aneinander angrenzend gegeneinander um einen Neigungswinkel geneigt sich parallel zur Erstreckungsrichtung der Beugungsstruktur erstrecken,
b) durch die Neigung der mindestens zwei Flächenabschnitte zueinander die Gegenflanke insgesamt eine von der Lichteinfallsseite her gesehen konkave Oberfläche aufweist,
**dadurch gekennzeichnet, daß**
c) bezogen auf die Grundfläche (4) der Bereich der Gegenflanke (6), in dem die Flächenabschnitte (7, 8) aneinander angrenzen, tiefer liegt als der tiefste Bereich der Blaze-Flanke (5).

2. Littrow-Gitter nach Anspruch 1, **dadurch gekennzeichnet, daß** die Flächenabschnitte (7, 8) senkrecht zur Erstreckungsrichtung der Beugungsstrukturen (3) gemessen ein Breitenverhältnis von 0,5 bis 2 aufweisen.

3. Littrow-Gitter nach Anspruch 1 oder 2, **dadurch gekennzeichnet, daß** der Neigungswinkel (β) im Bereich von 90° bis 150° liegt.

4. Littrow-Gitter nach einem der vorhergehenden Ansprüche, **dadurch gekennzeichnet, daß** es aus Quarzglas besteht.

5. Littrow-Gitter nach einem der vorhergehenden Ansprüche, **dadurch gekennzeichnet, daß** es eine die Reflektivität steigernde Beschichtung aufweist.

6. Littrow-Gitter nach Anspruch 5, daduch **gekennzeichnet**, daß die Beschichtung eine Aluminium-Beschichtung ist.

7. Littrow-Gitter nach einem der vorhergehenden Ansprüche, **dadurch gekennzeichnet, daß** es ein dielektrisches Schichtsystem aufweist.

8. Littrow-Gitter nach Anspruch 7, **dadurch gekennzeichnet, daß** das dielektrische Schichtsystem Schichten aus Al₂O₃ und MgF₂ umfaßt.

9. Littrow-Gitter nach Anspruch 7, **dadurch gekennzeichnet, daß** das dielektrische Schichtsystem Schichten aus LaF₃ und MgF₂ umfaßt.

10. Littrow-Gitter nach einem der vorhergehenden Ansprüche, **dadurch gekennzeichnet, daß** die Blaze-Flanke (5) senkrecht zur Erstreckungsrichtung der Beugungsstrukturen (3) gemessen eine Mindestbreite von g cos(Theta) aufweist, wobei g die Gitterperiode des Littrow-Gitters und Theta den Littrowwinkel bezeichnen.

11. Verwendung eines Littrow-Gitters nach einem der Ansprüche 1 bis 10 in einer Beugungsordnung der einfallenden Lichtwellenlänge oberhalb oder gleich der 15. Beugungsordnung.

12. Verwendung eines Littrow-Gitters nach einem der Ansprüche 1 bis 11 zur Beugung von UV-Licht (9, 10, 11, 12) mit einer Wellenlänge, die geringer ist als 250 nm.

## Claims

1. Littrow grating with a multiplicity of parallel diffraction structures succeeding one another periodically, which are arranged on a support defining a base area and each incorporate a plane blaze flank inclined towards the base area substantially at the Littrow angle and a counter-flank, wherein the blaze flank and the counter-flank form at the apex of a diffraction structure an apex angle which is less than 90°,
wherein
a) the counter-flank comprises at least two substantially plane area sections, which, bordering one another and inclined relative to one another by an angle of inclination extend parallel with the extension direction of the diffraction structure,
b) due to the inclination of the at least two area sections relative to one another the counter-flank all in all has a concave surface viewed from the light incidence side.
**characterized in that**
c) relative to the base area (4) the range of the counter-flank (6), in which the area sections (7, 8) border one another, lies deeper than the deepest range of the blaze flank (5).

2. Littrow grating according to Claim 1, **characterised in that** the area sections (7, 8) have a width ratio of 0.5 to 2 measured vertical to the extension direction of the diffraction structures (3).

3. Littrow grating according to Claim 1 or 2, **characterised in that** the angle of inclination (beta) lies in the range from 90° deg. to 150°.

4. Littrow grating according to any one of the preceding claims, **characterised in that** it consists of quartz glass.

5. Littrow grating according to any one of the preceding claims, **characterised in that** it comprises a coating increasing the reflectivity.

6. Littrow grating according to Claim 5, **characterized in that** the coating is an aluminium coating.

7. Littrow grating according to any one of the preceding claims, **characterised in that** it comprises a dielectric layer system.

8. Littrow grating according to Claim 7, **characterised in that** the dielectric layer system comprises layers of Al₂O₃ and MgF₂.

9. Littrow grating according to Claim 7, **characterised in that** the dielectric layer system comprises layers of LaF₃ and MgF₂.

10. Littrow grating according to any one of the preceding claims, **characterised in that** the blaze flank (5) comprises, measured vertical to the extension direction of the diffraction structures (3), a minimum width of g cos (theta), where g designates the grating period of the Littrow grating and theta the Littrow angle.

11. Use of a Littrow grating according to any one of Claims 1 to 10 in a diffraction order of the incident light wavelength above or equal to the 15th diffraction order.

12. Use of a Littrow grating according to any one of Claims 1 to 11 for the diffraction of UV light (9, 10, 11, 12) with a wavelength that is less than 250 nm.

## Revendications

1. Réseau échelle de type Littrow comportant une pluralité de structures de diffraction parallèles, se succédant périodiquement, qui sont disposées sur un substrat définissant une surface de base et comprennent chacune un flanc de blaze plan, incliné essentiellement d'un angle de Littrow par rapport à la surface de base, et un flanc. opposé, le flanc de blaze et le flanc opposé formant au sommet d'une structure de diffraction un angle d'apex inférieur à 90°,
dans lequel
a) le flanc opposé comprend au moins deux sections de surface essentiellement planes, adjacentes, inclinées l'une par rapport à l'autre d'un angle d'inclinaison, qui s'étendent parallèlement à la direction d'extension de la structure de diffraction.
b) du fait de l'inclinaison des au moins deux sections de surface l'une par rapport à l'autre, le flanc opposé présente globalement une surface concave, vu du côté d'incidence de la lumière,
**caractérisé par le fait que**
c) par rapport à la surface de base (4), la partie du flanc opposé (6) dans laquelle les sections de surface (7, 8) sont adjacentes est située plus bas que la partie la plus basse du flanc de blaze (5).

2. Réseau échelle de type Littrow selon la revendication 1, **caractérisé par le fait que** les sections de surface (7, 8) présentent, mesuré perpendiculairement à la direction d'extension des structures de diffraction (3), un rapport de largeurs de 0,5 à 2.

3. Réseau échelle de type Littrow selon la revendication 1 ou 2, **caractérisé par le fait que** l'angle d'inclinaison (β) se situe dans la plage comprise entre 90° et 150°.

4. Réseau échelle de type Littrow selon l'une des revendications précédentes, **caractérisé par le fait qu'**il est constitué de quartz.

5. Réseau échelle de type Littrow selon l'une des revendications précédentes, **caractérisé par le fait qu'**il présente un revêtement augmentant la réflectivité.

6. Réseau échelle de type Littrow selon l'une des revendications précédentes, **caractérisé par le fait que** le revêtement est un revêtement en aluminium.

7. Réseau échelle de type Littrow selon l'une des revendications précédentes, **caractérisé par le fait qu'**il présente un système de couches diélectriques.

8. Réseau échelle de type Littrow selon la revendication 7, **caractérisé par le fait que** le système de couches diélectriques comprend des couches en AL₂O₃ et MgF₂.

9. Réseau échelle de type Littrow selon la revendication 7, **caractérisé par le fait que** le système de couches diélectriques comprend des couches en LAF₃ et MgF₂.

10. Réseau échelle de type Littrow selon l'une des revendications précédentes, **caractérisé par le fait que** le flanc de blaze (5) présente, mesuré perpendiculairement à la direction d'extension des structures de diffraction (3), une largeur minimum de g cos(thêta), où g désigne la période de réseau du réseau échelle de type Littrow et thêta l'angle de Littrow.

11. Utilisation d'un réseau échelle de type Littrow selon l'une des revendications 1 à 10 à un ordre de diffraction de la longueur d'onde lumineuse incidente supérieur ou égal au 15^{e} ordre de diffraction.

12. Utilisation d'un réseau échelle de type Littrow selon l'une des revendications 1 à 11 pour diffracter la lumière UV (9, 10, 11, 12) d'une longueur d'onde inférieure à 250 nm.
